(19) Europäisches Patentamt
European Patent Office
Office européen des brevets

(11) **EP 4 116 554 B1**

## (12) EUROPEAN PATENT SPECIFICATION

(45) Date of publication and mention
of the grant of the patent:
**28.08.2024 Bulletin 2024/35**

(21) Application number: **21183773.7**

(22) Date of filing: **05.07.2021**

(51) International Patent Classification (IPC):
**F02C 3/22** *(2006.01)* **F02C 3/30** *(2006.01)*
**F23R 3/34** *(2006.01)* **F23R 3/36** *(2006.01)*

(52) Cooperative Patent Classification (CPC):
**F02C 3/22; F02C 3/30; F23R 3/346; F23R 3/36;**
F05D 2230/80; F05D 2270/0831;
F23R 2900/00002; F23R 2900/00016;
F23R 2900/03341

(54) **METHOD FOR OPERATING A GAS TURBINE AND METHOD FOR RETROFITTING A GAS TURBINE**

VERFAHREN ZUM BETREIBEN EINER GASTURBINE SOWIE VERFAHREN ZUM NACHRÜSTEN EINER GASTURBINE

PROCÉDÉ DE FONCTIONNEMENT D'UNE TURBINE À GAZ ET PROCÉDÉ DE MISE À NIVEAU D'UNE TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.01.2023 Bulletin 2023/02**

(73) Proprietor: **Ansaldo Energia Switzerland AG**
**5400 Baden (CH)**

(72) Inventors:
• **CIANI, Andrea**
**8057 ZÜRICH (CH)**
• **PENNELL, Douglas**
**5210 WINDISCH (CH) (CH)**
• **GRANET, Victor**
**5430 WETTINGEN (CH)**

(74) Representative: **Studio Torta S.p.A. et al**
**Corso Magenta, 56**
**20123 Milano (IT)**

(56) References cited:
**EP-A1- 2 902 708**     **US-A1- 2009 277 182**
**US-A1- 2017 298 817**     **US-B1- 6 201 029**

**Description**

TECHNICAL FIELD

The present invention relates to a method for operating a gas turbine and method for retrofitting a gas turbine.
The gas turbine is a gas turbine for power generation and is typically connected to an electric generator, which is in turn connected to an electric grid.

BACKGROUND

Power plants for power generation comprise a gas turbine connected to an electric generator. The gas turbine is supplied with air and a fuel and converts the energy of the fuel into mechanical power available at the shaft. The shaft is connected to the shaft of an electric generator, for generating electric power to be supplied to an electric grid.
Traditionally the fuel supplied to the gas turbine is natural gas or oil; in the first case only natural gas is supplied to the gas turbine, in the second case oil, possibly in emulsion with water, is supplied to the gas turbine.
The market requires the gas turbines to operate in the future with fuels different from natural gas or oil; in particular gas turbines should be able to correctly operate with hydrogen (pure hydrogen) or mixtures containing hydrogen. The hydrogen amount in the mixtures can be small or large, e.g. a mixture can contain about 10% or 30% or 50% or 70% or 80% or 90% or 95% or more hydrogen and the balance can be natural gas.
Gas turbines that have been designed for operation with natural gas and/or oil could not be able to correctly operate with hydrogen or mixtures containing hydrogen, because of the much higher reactivity (e.g. auto ignition time) of the hydrogen in a combustion system of a gas turbine than natural gas or oil. These operating problems appear in particular in gas turbines with premixed combustion or at least partly premixed combustion (i.e. combustion occurring to a large extent by premixed combustion and to a smaller extent by diffusion combustion).
The much higher reactivity makes the hydrogen or mixture containing hydrogen to combust faster once it has been supplied into the combustion system than natural gas or oil; the consequence is that the flame generated by hydrogen or mixture containing hydrogen anchors more upstream than flames generated by natural gas or oil. Therefore, the hot gas generated during the combustion has a longer post-flame residence time in the combustor and NOx have more time to generate.
Additionally, the gas turbine with combustion systems designed for operation with natural gas or oil can be regulated differently when operated with hydrogen or mixtures containing hydrogen; such a regulation on the one side makes operation with hydrogen or mixture containing hydrogen more stable and less prone to flashback, but on the other side causes even bigger NOx emission. For example, such a regulation may involve the increase of fuel that is combusted by diffusion combustion (pilot fuel) and consequently a reduction of the fuel that is combusted by premixed combustion.
NOx emissions discharged in the atmosphere are limited by rules and regulations; typically these rules and regulations refer to NOx emissions in the flue gas discharged by the gas turbine corrected with reference to the oxygen content in the same flue gas.
The higher NOx generation during operation with hydrogen or mixtures containing hydrogen, for a gas turbine whose combustor was designed for operation with natural gas or oil, results in higher NOx emissions and therefore higher corrected NOx emissions.
A gas turbine engine combustion system according to the prior art is shown in the document US 2009/0277182.

SUMMARY

An aspect of the invention includes providing a method for operating a gas turbine and a method for retrofitting a gas turbine by which gas turbines can be operated with hydrogen or a mixture containing hydrogen with limited corrected NOx emissions.
These and further aspects are attained by providing a method for operating a gas turbine and method for retrofitting a gas turbine in accordance with the accompanying claims.
Advantageously, the method can counteract flashback, because the reactivity of the hydrogen or mixture containing hydrogen in the combustion system is reduced, thanks to water injection.
NOx emissions are a key factor for the operation of a gas turbine, because these emissions have very stringent low limits defined by rules and regulations, which must be met.
In order to compare the NOx emissions from gas turbines with NOx emissions prescribed in rules and regulations, the NOx emissions that can be measured in the flue gas of a gas turbine are corrected with reference to the oxygen content of the same flue gas.
In other words, the corrected NOx content of the flue gas can be obtained from:

$$NOx_{corrected} = NOx_{measured} \, (20.9\text{-}Oxygen_{ref})/(20.9\text{-}Oxygen_{measured})$$

where (amounts by volume):

- $NOx_{corrected}$ is the corrected amount of NOx in the flue gas, this amount can e.g. be used to compare actual gas turbine NOx emissions with the NOx emissions defined in rules and regulations;
- $NOx_{measured}$ is the NOx that can be measured (in a known way) in the flue gas;
- 20.9 is the oxygen amount in air;
- $Oxygen_{ref}$ is a reference oxygen content in the flue gas; this value is defined by the rules and regulations and is e.g. 15%;
- $Oxygen_{measured}$ is the oxygen amount that can be measured (in a known way) in the flue gas.

By supplying water during combustion of hydrogen or mixture containing hydrogen, a part of the heat generated by the combustion is required for heating and vaporizing the water; thus a part of the hydrogen or mixture containing hydrogen is combusted for heating and vaporizing the water. The combustion of this part of fuel consumes oxygen, that would actually not be consumed in operation without water supply e.g. for same power. Therefore, the amount of oxygen in the flue gas is reduced compared to a situation where hydrogen or mixture containing hydrogen are combusted without water supply. As derivable from the above equation, the reduced oxygen content in the flue gas ($Oxygen_{measured}$) has a beneficial effect on the $NOx_{corrected}$, because the lower the $Oxygen_{measured}$ the lower the $NOx_{corrected}$.

BRIEF DESCRIPTION OF THE DRAWINGS

Further characteristics and advantages will be more apparent from the description of a preferred but non-exclusive embodiment of the method for operating a gas turbine and method for retrofitting a gas turbine, illustrated by way of non-limiting example in the accompanying drawings, in which:

Figure 1 schematically shows a gas turbine;

Figures 2 through 4 show different examples of combustion systems;

Figure 5 shows a gas turbine after refurbishment,

Figure 6 shows a particular embodiment of a second combustion area.

DETAILED DESCRIPTION OF EXEMPLARY EMBODIMENTS

With reference to the figures, a gas turbine 1 comprises a compressor 2, a combustion system 3, a turbine 5 downstream of the combustion system 3 and an exhaust system 6 for discharging a flue gas from the turbine 5.

The combustion system 3 has a first combustion area 8 where a first fuel 9 is combusted with air 10 fed by the compressor 2 generating a first hot gas 12, a second combustion area 13 where a second fuel 14 is combusted with oxygen contained in the first hot gas 12 generating a second hot gas 15 that is fed to the turbine 5. At the turbine 5 the second hot gas 15 is expanded to collect mechanical power.

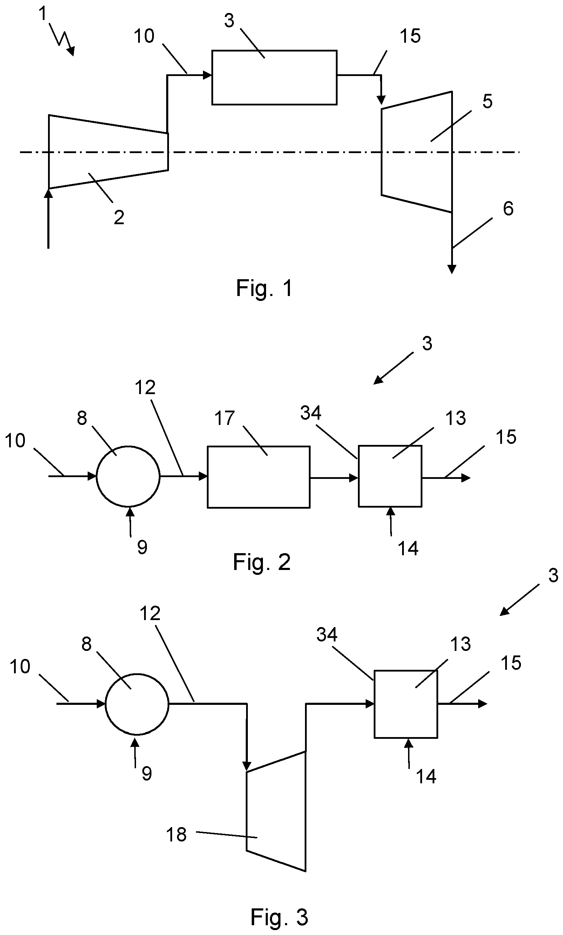

In different examples, the first combustion area 8 is defined by a first combustor and the second combustion area 13 is defined by a second combustor; figures 2 and 3 show examples where the first combustion area 8 is defined in a first combustor and the second combustion area 13 is defined by a second combustor. Between the first and the second combustor additional components may be provided or not (i.e. the first and the second combustor can be directly connected without additional components in-between). In this respect figure 2 shows an example where a diluter 17 is provided between the first and the second combustors for introducing air into the first hot gas 12 passing through it and figure 3 shows an example where a turbine 18 is provided between the first and the second combustors for partially expanding the first hot gas 12 passing through it.

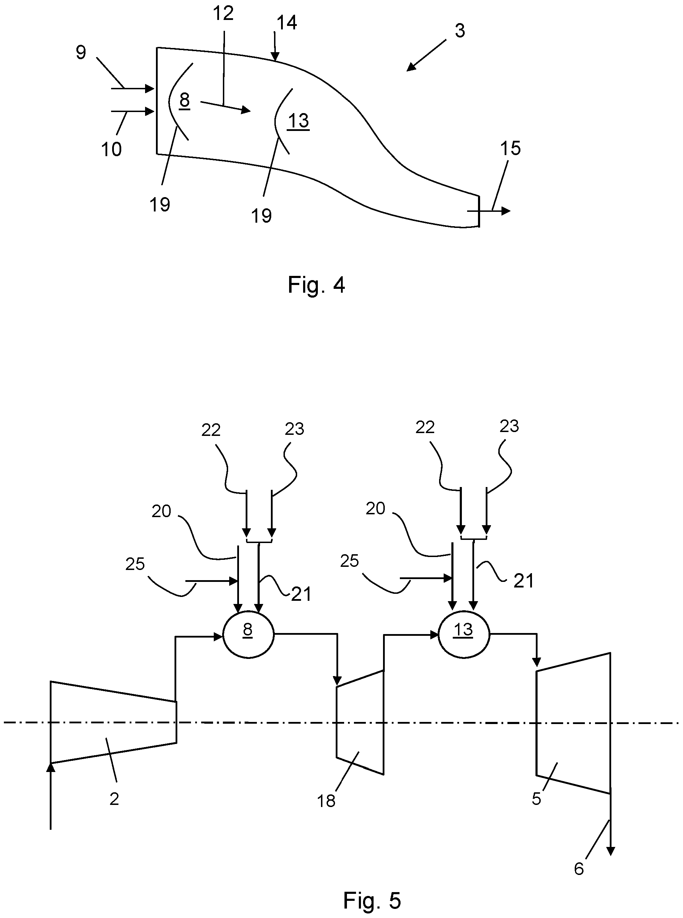

Alternatively, the first combustion area 8 and the second combustion area 13 can also be both defined in a same combustor. Figure 4 shows an example with a combustor containing both the first combustion area 8 and the second combustion area 13. For example the first fuel 9 may be fed at a part upstream (with reference to the gas flow direction through the combustor) of the combustor and the second fuel 14 may be fed at an intermediate part or downstream part (with reference to the gas flow direction through the combustor) of the combustor. In this figure reference 19 identifies the flames at the first combustion area 8 and second combustion area 13.

The method for retrofitting the gas turbine comprises providing a supply 25 of a fuel being hydrogen or a mixture containing hydrogen for the first combustion area 8 and for the second combustion area 13. For example, a supply 25 for each combustion area 8, 13 may be provided or one supply 25 that feeds both the first and the second combustion areas 8, 13 may also be provided.

According to the method, a supply of water for the second combustion area 13 may be provided or not. In this respect, in case a supply of water is already present, no need of providing the supply of water exists; for example a supply of water may be present because water is used for power augmentation (i.e. to supply water in the combustor to increase the power generated by the gas turbine) or because the second combustion area is or can be supplied by an emulsion of oil and water. In contrast, in case a supply of water is not present, such a supply of water needs to be provided; for example a supply of water can be provided by providing a nozzle or lance beside the nozzle or lance for the fuel, because at this position space is usually available.

In addition, a controller arranged for regulating the amount of water supplied to the second combustion area 13 based on a residual oxygen content in the flue gas or a value indicative thereof is also provided.

The control provides for increasing the water amount supplied to the second combustion chamber when the oxygen content in the flue gas increases and vice versa.

For example a target value or target range for the oxygen content in the flue gas may be set and the water supply can be regulated to maintain the residual oxygen content in the flue gas at this value or within this range. In this case, water supply is increased when the oxygen content in the flue gas is higher than the target value or range and reduced when the oxygen content in the flue gas is lower than the target value or range.

The controller may be a software, e.g. implemented by an upgrade of the control system of the gas turbine or can be a separate hardware that runs a software and that is connected to the control system of the gas turbine; the hardware running a software may also be directly connected to and drive the valves that regulate the water flow.

In addition, sensors connected to the controller to measure the residual oxygen content can also be provided. For example, the sensors can be a gas analyser.

In addition or alternatively, the controller may be provided with a software for calculating or simulating the oxygen content of the flue gas. The software can be a commercial software simulating the behaviour of the gas turbine and its operating parameters.

The combustion system 3 is advantageously designed for dual fuel operation with natural gas and/or oil (emulsion of oil and water); therefore the sizes and geometries of the combustion system and the components thereof are defined and optimized for operation with natural gas and/or oil (emulsion of oil and water).

In addition, the first combustion area 8 and at the second combustion area 13 of the combustion system are - already before retrofitting - provided with a dual fuel supply system. The dual fuel supply system has a line 20 for the natural gas and a line 21 for the emulsion of oil and water; the line 21 is in turn fed by a line 22 for oil and a line 23 for water. Retrofitting can thus take advantage of the dual fuel supply system.

In this situation, providing a supply 25 of fuel being hydrogen or mixture containing hydrogen to the second combustion area 8 comprises connecting the supply 25 to the line 20 for natural gas.

In this embodiment of the method, typically it is not required the provision of the supply of water, because the line 23 and line 21 can be used for water supply in the first combustion area 8.

Likewise, providing a supply 25 of a fuel being hydrogen or a mixture containing hydrogen to the first combustion area 13 preferably also comprises connecting the supply of fuel being hydrogen or a mixture containing hydrogen to the line 20 for natural gas.

The controller can e.g. drive valves that regulate the water flow to the second combustion area 13; in addition the controller can drive valves that regulate the oil flow to the second combustion area, e.g. to stop it.

The controller can e.g. also regulate valves that regulate the flow of water to the first combustion area 8, e.g. to stop it, and valves that regulate the oil flow to the first combustion area, e.g. to stop it.

Dual fuel supply systems preferably have concentric nozzles, with central nozzles connected to the line 21 and outer annular nozzles connected to the line 20. Refurbishment of combustion systems with these nozzles is advantageous because the water is injected at the centre of the hydrogen or mixture containing hydrogen and counteracts flashback in a very effective way, thanks to the central positioning of the water injection.

Thus, retrofitting of gas turbines with dual fuel combustion systems is particularly advantageous, because the hydrogen or mixture containing hydrogen can be delivered via the line 20 originally intended for natural gas and at the same time water can be delivered via the line 21 originally intended for the oil/water emulsion.

The present invention also refers to a method for operating a gas turbine.

The method comprises supplying the first combustion area 8 with a fuel being hydrogen or a mixture containing hydrogen and supplying the second combustion area 13 with a fuel being hydrogen or a mixture containing hydrogen and with water. Thus, the method comprises regulating the amount of water supplied to the second combustion area 13 based on a residual oxygen content in the flue gas or a value indicative thereof.

Gas turbine operation is possible with a fuel being the emulsion of oil and water or with natural gas. For the same power, hydrogen or mixture containing hydrogen operation is also possible. In this case, since the hydrogen or mixture containing hydrogen has a higher reactivity in the combustion chamber than natural gas or oil (reactivity depends on the fuel but also on the amount of oxygen available for combustion), at the first combustion area the operating conditions are adjusted for safe operation; usually this results in higher NOx generation.

In case the first combustion area 8 (and possibly also the second combustion area 13) is operated with a partly premixed combustion (i.e. combustion occurs partly by premixed combustion and partly by diffusion combustion), the percentage of diffusion combustion may be increased. Likewise, in case the first combustion area 8 (and possibly also the second combustion area 13) is operated by pure premixed combustion, a diffusion combustion may be introduced. In case the first combustion area 8 (and possibly also the second combustion area 13) is operated by pure diffusion combustion, the temperatures may increase when the combustion area is fed with hydrogen or mixture containing hydrogen.

In order to cope with the higher NOx emissions, at the second combustion area 13 water is injected together with hydrogen or mixture containing hydrogen. Such a water injection is generally not required for safety conditions, but it consumes oxygen and thus helps reducing the corrected NOx content in the flue gas.

Preferably, the second combustion area has a dual fuel supply system comprising the line 20 for natural gas and the line 21 for the emulsion of oil and water.

Advantageously, at the second combustion area 13 the fuel being hydrogen or mixture containing hydrogen is fed via the line 20 for natural gas and the water is fed via the line 21 for the emulsion.

Likewise, the first combustion area may also have a dual fuel supply system comprising the line 20 for natural gas and the line 21 for the emulsion of oil and water and the fuel being hydrogen or mixture containing hydrogen is fed via the line 20 for natural gas.

Retrofitting of gas turbines with dual fuel combustion systems is particularly advantageous, because it requires limited hardware adaptation.

In a preferred embodiment of the method, the water and hydrogen or mixture containing hydrogen are injected concentrically; in particular the water is injected centrally and the hydrogen or mixture containing hydrogen is injected annularly around it. This injection proved to be particularly effective in counteracting flashback.

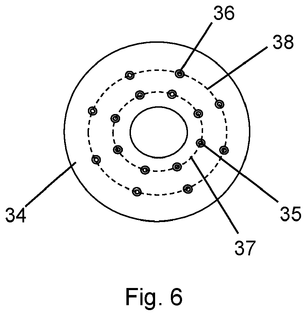

In addition, figure 6 shows an embodiment with the second combustion area 13 delimited by the front panel 34 having the nozzles 35, 36 for injecting the water (centrally) and hydrogen or mixture containing hydrogen (annularly around the water). These nozzles are distributed over an inner perimeter 37 (nozzles 35) and an outer perimeter 38 (nozzles 36).

Each nozzle 36 at the outer perimeter 38 can inject a larger amount of water than each nozzle 35 at the inner perimeter 37. This measure proved to effectively counteract flashback in some combustor configurations where flashback was more prone to start at the periphery of the combustor. It is anyhow clear that depending on the specific design and boundary conditions the opposite could be preferred. E.g. when flashback is more prone to start at the center of the combustor, the nozzles 35 at the inner perimeter 37 may inject a larger amount of water than the nozzles 36 at the outer perimeter 38. Thus, advantageously a larger amount of water is preferably injected at the location where flashback is more prone to start. In this context, flashback start may be assessed via tests.

In addition, according to the method the gas turbine output power can be maintained constant or substantially constant during the regulations. Regulations are in fact not made in view of power regulations but NOx emissions.

**Claims**

1. A method for operating a gas turbine (1),

   the gas turbine (1) comprising at least a compressor (2), a first combustion area (8) where fuel is combusted with air fed by the compressor (2) generating a first hot gas (12), a second combustion area (13) where fuel is combusted with oxygen contained in the first hot gas (12) generating a second hot gas (15), a turbine (5) where the second hot gas (15) is expanded to collect mechanical power, a flue gas being discharged from the turbine (5), the method being **characterised by**

   - supplying the first combustion area (8) with a fuel being hydrogen or a mixture containing hydrogen,
   - supplying the second combustion area (13) with a fuel being hydrogen or a mixture containing hydrogen,
   - supplying the second combustion area (13) with water,
   - regulating the amount of water supplied to the second combustion area (13) based on a residual oxygen content in the flue gas or a value indicative thereof.

2. The method of claim 1, **characterized in that**

the second combustion area (13) has a dual fuel supply system comprising a line (20) for natural gas and a line (21) for an emulsion of oil and water,

wherein the fuel being hydrogen or a mixture containing hydrogen is fed via the line (20) for natural gas and the water is fed via the line (21) for the emulsion.

3. The method according to any of the previous claims, **characterized in that**

the first combustion area (13) has a dual fuel supply system comprising a line (20) for natural gas and a line (21) for an emulsion of oil and water,

wherein the fuel being hydrogen or a mixture containing hydrogen is fed via the line (20) for natural gas.

4. The method of claim 2 or 3, **characterized by**

concentrically injecting the water and hydrogen or mixture containing hydrogen,

wherein the water is injected centrally and the hydrogen or mixture containing hydrogen is injected annularly around it.

5. The method of claim 4, **characterized in that**

the second combustion area (13) is delimited by a front panel (34) having nozzles (35, 36) for injecting the water and hydrogen or mixture containing hydrogen, the nozzles being distributed over an inner and an outer perimeter (37, 38),

wherein each nozzle (36) at the outer perimeter (38) injects a larger amount of water than each nozzle (35) at the inner perimeter (37) or vice-versa.

6. The method of any of the previous claims, **characterized in that** a target value or target range for the oxygen content in the flue gas is set and the water supply is increased when the oxygen content in the flue gas is higher than the target value or target range and reduced when the oxygen content in the flue gas is lower than the target value or target range.

7. Method according to any of the previous claims, **characterized by** maintaining the gas turbine output power substantially constant during the regulation.

8. Method for retrofitting a gas turbine (1),

the gas turbine (1) comprising at least a compressor (2), a first combustion area (8) where fuel is combusted with air fed by the compressor (2) generating a first hot gas (12), a second combustion area (13) where fuel is combusted with oxygen contained in the first hot gas (12) generating a second hot gas (15), a turbine (5) where the second hot gas (15) is expanded to collect mechanical power, an exhaust duct (6) for discharging a flue gas from the turbine (5),

the method being **characterised by**

- providing a supply (25) of a fuel being hydrogen or a mixture containing hydrogen for the first combustion area (8) and for the second combustion area (13),
- providing a supply of water for the second combustion area (13) if not present,
- providing a controller arranged for regulating the amount of water supplied to the second combustion area (13) based on residual oxygen content in the flue gas or a value indicative thereof.

9. The method of claim 8, **characterized in that**

the second combustion area (13) is provided with a dual fuel supply system comprising a line (20) for natural gas and a line (21) for an emulsion of oil and water,

wherein providing a supply (25) of a fuel being hydrogen or a mixture containing hydrogen to the second combustion area (13) comprises connecting the supply (25) of fuel being hydrogen or a mixture containing hydrogen to the line (20) for natural gas.

10. The method of claims 8 or 9, **characterized in that**

the first combustion area (13) is provided with a dual fuel supply system comprising a line (20) for natural gas and a line (21) for an emulsion of oil and water,

wherein providing a supply (25) of a fuel being hydrogen or a mixture containing hydrogen to the first combustion area (13) comprises connecting the supply (25) of fuel being hydrogen or a mixture containing hydrogen to the line (20) for natural gas.

11. The method of any of claims 8 through 10, **characterised in that** the first combustion area (8) is defined by a first combustor and the second combustion area (13) is defined by a second combustor.

12. The method of any of claims 8 through 10, **characterised in that** the first combustion area (8) and the second combustion area (13) are both defined in a same combustor.

**Patentansprüche**

1. Verfahren zum Betreiben einer Gasturbine (1),

    wobei die Gasturbine (1) mindestens einen Verdichter (2), einen ersten Verbrennungsbereich (8), in dem Brennstoff mit von dem Verdichter (2) zugeführter Luft verbrannt wird, wobei ein erstes heißes Gas (12) erzeugt wird, einen zweiten Verbrennungsbereich (13), in dem Brennstoff mit in dem ersten heißen Gas (12) enthaltenem Sauerstoff verbrannt wird, wobei ein zweites heißes Gas (15) erzeugt wird, und eine Turbine (5) umfasst, in der das zweite heiße Gas (15) expandiert wird, um mechanische Energie zu sammeln, wobei ein Abgas aus der Turbine (5) abgeleitet wird,
    wobei das Verfahren **gekennzeichnet ist durch**

    - Versorgung des ersten Verbrennungsbereichs (8) mit einem Brennstoff, der Wasserstoff oder ein wasserstoffhaltiges Gemisch ist,
    - Versorgung des zweiten Verbrennungsbereichs (13) mit einem Brennstoff, der Wasserstoff oder ein wasserstoffhaltiges Gemisch ist,
    - die Versorgung des zweiten Verbrennungsbereichs (13) mit Wasser,
    - Regelung der dem zweiten Verbrennungsbereich (13) zugeführten Wassermenge auf der Grundlage eines Restsauerstoffgehalts im Abgas oder eines dafür indikativen Werts.

2. Verfahren nach Anspruch 1, **dadurch gekennzeichnet, dass**

    der zweite Verbrennungsbereich (13) ein duales Brennstoffversorgungssystem aufweist, das eine Leitung (20) für Erdgas und eine Leitung (21) für eine Emulsion aus Öl und Wasser umfasst,
    wobei der Brennstoff, bei dem es sich um Wasserstoff oder ein wasserstoffhaltiges Gemisch handelt, über die Leitung (20) für Erdgas zugeführt wird, und wobei das Wasser über die Leitung (21) für die Emulsion zugeführt wird.

3. Verfahren nach einem der vorstehenden Ansprüche, **dadurch gekennzeichnet, dass** der erste Verbrennungsbereich (13) ein duales Brennstoffversorgungssystem aufweist, das eine Leitung (20) für Erdgas und eine Leitung (21) für eine Emulsion aus Öl und Wasser umfasst,
    wobei der Brennstoff Wasserstoff oder ein wasserstoffhaltiges Gemisch ist und über die Erdgasleitung (20) zugeführt wird.

4. Verfahren nach Anspruch 2 oder 3, **gekennzeichnet durch**

    konzentrisches Einspritzen des Wassers und des Wasserstoffs oder des wasserstoffhaltigen Gemisches, wobei das Wasser zentral eingespritzt wird und der Wasserstoff oder das wasserstoffhaltige Gemisch ringförmig darum herum eingespritzt wird.

5. Verfahren nach Anspruch 4, **dadurch gekennzeichnet, dass**

    der zweite Verbrennungsbereich (13) durch eine Frontplatte (34) begrenzt ist, die Düsen (35, 36) zum Einspritzen des Wassers und des Wasserstoffs oder des wasserstoffhaltigen Gemisches aufweist, wobei die Düsen über einen inneren und einen äußeren Umfang (37, 38) verteilt sind,

wobei jede Düse (36) am äußeren Umfang (38) eine größere Wassermenge einspritzt als jede Düse (35) am inneren Umfang (37) oder umgekehrt.

6. Verfahren nach einem der vorstehenden Ansprüche, **dadurch gekennzeichnet, dass** ein Zielwert oder Zielbereich für den Sauerstoffgehalt im Abgas festgelegt wird und die Wasserzufuhr erhöht wird, wenn der Sauerstoffgehalt im Abgas höher als der Zielwert oder Zielbereich ist, und verringert wird, wenn der Sauerstoffgehalt im Abgas niedriger als der Zielwert oder Zielbereich ist.

7. Verfahren nach einem der vorstehenden Ansprüche, **dadurch gekennzeichnet, dass** die Gasturbinenausgangsleistung während der Regelung im Wesentlichen konstant gehalten wird.

8. Verfahren zum Nachrüsten einer Gasturbine (1),

wobei die Gasturbine (1) mindestens einen Verdichter (2), einen ersten Verbrennungsbereich (8), in dem Brennstoff mit von dem Verdichter (2) zugeführter Luft verbrannt wird, wobei ein erstes heißes Gas (12) erzeugt wird, einen zweiten Verbrennungsbereich (13), in dem Brennstoff mit in dem ersten heißen Gas (12) enthaltenem Sauerstoff verbrannt wird, wobei ein zweites heißes Gas (15) erzeugt wird, eine Turbine (5), in der das zweite heiße Gas (15) expandiert wird, um mechanische Leistung zu sammeln, und eine Abgasleitung (6) zum Ableiten eines Abgases aus der Turbine (5) umfasst,
wobei das Verfahren **gekennzeichnet ist durch**

- Bereitstellen einer Versorgung (25) mit einem Brennstoff, der Wasserstoff oder ein wasserstoffhaltiges Gemisch ist, für den ersten Verbrennungsbereich (8) und für den zweiten Verbrennungsbereich (13),
- Bereitstellen einer Versorgung mit Wasser für den zweiten Verbrennungsbereich (13), falls nicht vorhanden,
- Bereitstellen eines Reglers, der so ausgebildet ist, dass er die dem zweiten Verbrennungsbereich (13) zugeführte Wassermenge auf der Grundlage des Restsauerstoffgehalts im Abgas oder eines dafür indikativen Werts reguliert.

9. Verfahren nach Anspruch 8, **dadurch gekennzeichnet, dass**

der zweite Verbrennungsbereich (13) mit einem dualen Brennstoffversorgungssystem versehen ist, das eine Leitung (20) für Erdgas und eine Leitung (21) für eine Emulsion aus Öl und Wasser umfasst,
wobei das Bereitstellen einer Zufuhr (25) eines Brennstoffs, bei dem es sich um Wasserstoff oder ein Wasserstoff enthaltendes Gemisch handelt, für den zweiten Verbrennungsbereich (13) das Verbinden der Zufuhr (25) des Brennstoffs, bei dem es sich um Wasserstoff oder ein Wasserstoff enthaltendes Gemisch handelt, mit der Leitung (20) für Erdgas umfasst.

10. Verfahren nach Anspruch 8 oder 9, **dadurch gekennzeichnet, dass**

der erste Verbrennungsbereich (13) mit einem dualen Brennstoffversorgungssystem ausgestattet ist, das eine Leitung (20) für Erdgas und eine Leitung (21) für eine Emulsion aus Öl und Wasser umfasst,
wobei die Versorgung (25) des ersten Verbrennungsbereichs (13) mit einem Brennstoff, bei dem es sich um Wasserstoff oder ein wasserstoffhaltiges Gemisch handelt, das Verbinden der Versorgung (25) mit Wasserstoff oder einem wasserstoffhaltigen Gemisch mit der Leitung (20) für Erdgas umfasst.

11. Verfahren nach einem der Ansprüche 8 bis 10, **dadurch gekennzeichnet, dass** der erste Verbrennungsbereich (8) durch eine erste Brennkammer und der zweite Verbrennungsbereich (13) durch eine zweite Brennkammer definiert ist.

12. Verfahren nach einem der Ansprüche 8 bis 10, **dadurch gekennzeichnet, dass** der erste Verbrennungsbereich (8) und der zweite Verbrennungsbereich (13) beide in derselben Brennkammer definiert sind.

**Revendications**

1. Procédé pour faire fonctionner une turbine à gaz (1),

la turbine à gaz (1) comprenant au moins un compresseur (2), une première zone de combustion (8) où un combustible est brûlé avec de l'air délivré par le compresseur (2) en générant un premier gaz chaud (12), une deuxième zone de combustion (13) où un combustible est brûlé avec l'oxygène contenu dans le premier gaz chaud (12) en générant un deuxième gaz chaud (15), une turbine (5) où le deuxième gaz chaud (15) est détendu pour que de l'énergie mécanique soit collectée, un gaz d'échappement étant déchargé hors de la turbine (5), le procédé étant **caractérisé par**

- l'apport à la première zone de combustion (8) d'un combustible qui est de l'hydrogène ou un mélange contenant de l'hydrogène,
- l'apport à la deuxième zone de combustion (13) d'un combustible qui est de l'hydrogène ou un mélange contenant de l'hydrogène,
- l'apport d'eau à la deuxième zone de combustion (13),
- la régulation de la quantité d'eau apportée à la deuxième zone de combustion (13) sur la base de la teneur en oxygène résiduel dans le gaz d'échappement ou d'une valeur indicative de celle-ci.

2. Procédé selon la revendication 1, **caractérisé en ce que**

la deuxième zone de combustion (13) a un système d'apport de combustible double comprenant une conduite (20) pour du gaz naturel et une conduite (21) pour une émulsion d'huile et d'eau, dans lequel le combustible, qui est de l'hydrogène ou un mélange contenant de l'hydrogène, est introduit via la conduite (20) pour le gaz naturel et l'eau est introduite via la conduite (21) pour l'émulsion.

3. Procédé selon l'une quelconque des revendications précédentes, **caractérisé en ce que**

la première zone de combustion (13) a un système d'apport de combustible double comprenant une conduite (20) pour du gaz naturel et une conduite (21) pour une émulsion d'huile et d'eau, dans lequel le combustible, qui est de l'hydrogène ou un mélange contenant de l'hydrogène, est introduit via la conduite (20) pour le gaz naturel.

4. Procédé selon la revendication 2 ou 3, **caractérisé par**

l'injection concentrique de l'eau et de l'hydrogène ou du mélange contenant de l'hydrogène, dans lequel l'eau est injectée au centre et l'hydrogène ou le mélange contenant de l'hydrogène est injecté de manière annulaire autour de celle-ci.

5. Procédé selon la revendication 4, **caractérisé en ce que**

la deuxième zone de combustion (13) est délimitée par un panneau avant (34) ayant des buses (35, 36) pour injecter l'eau et l'hydrogène ou le mélange contenant de l'hydrogène, les buses étant distribuées sur un périmètre intérieur et un périmètre extérieur (37, 38), dans lequel chaque buse (36) au niveau du périmètre extérieur (38) injecte une quantité d'eau supérieure à celle de chaque buse (35) au niveau du périmètre intérieur (37), ou vice versa.

6. Procédé selon l'une quelconque des revendications précédentes, **caractérisé en ce que** une valeur cible ou plage cible pour la teneur en oxygène du gaz d'échappement est établie et l'apport d'eau est augmenté quand la teneur en oxygène du gaz d'échappement est supérieure à la valeur cible ou plage cible, et est réduit quand la teneur en oxygène du gaz d'échappement est inférieure à la valeur cible ou plage cible.

7. Procédé selon l'une quelconque des revendications précédentes, **caractérisé par** le maintien pratiquement constant de la puissance de sortie de la turbine à gaz durant la régulation.

8. Procédé pour rénover une turbine à gaz (1),

la turbine à gaz (1) comprenant au moins un compresseur (2), une première zone de combustion (8) où un combustible est brûlé avec de l'air délivré par le compresseur (2) en générant un premier gaz chaud (12), une deuxième zone de combustion (13) où un combustible est brûlé avec l'oxygène contenu dans le premier gaz chaud (12) en générant un deuxième gaz chaud (15), une turbine (5) où le deuxième gaz chaud (15) est détendu pour que de l'énergie mécanique soit collectée, un canal d'échappement (6) pour décharger le gaz d'échappement hors de la turbine (5),
le procédé étant **caractérisé par**

- la fourniture d'un apport (25) d'un combustible qui est de l'hydrogène ou un mélange contenant de l'hydrogène à la première zone de combustion (8) et à la deuxième zone de combustion (13),
- la fourniture d'un apport d'eau pour la deuxième zone de combustion (13) s'il n'est pas présent,
- la fourniture d'un contrôleur disposé de manière à réguler la quantité d'eau apportée à la deuxième zone de combustion (13) sur la base de la teneur en oxygène résiduel dans le gaz d'échappement ou d'une valeur indicative de celle-ci.

9. Procédé selon la revendication 8, **caractérisé en ce que**

la deuxième zone de combustion (13) est dotée d'un système d'apport de combustible double comprenant une conduite (20) pour du gaz naturel et une conduite (21) pour une émulsion d'huile et d'eau,
dans lequel la fourniture d'un apport (25) d'un combustible qui est de l'hydrogène ou un mélange contenant de l'hydrogène à la deuxième zone de combustion (13) comprend la connexion de l'apport (25) de combustible qui est de l'hydrogène ou un mélange contenant de l'hydrogène à la conduite (20) pour le gaz naturel.

10. Procédé selon la revendication 8 ou 9, **caractérisé en ce que**

la première zone de combustion (13) est dotée d'un système d'apport de combustible double comprenant une conduite (20) pour du gaz naturel et une conduite (21) pour une émulsion d'huile et d'eau,
dans lequel la fourniture d'un apport (25) d'un combustible qui est de l'hydrogène ou un mélange contenant de l'hydrogène à la première zone de combustion (13) comprend la connexion de l'apport (25) de combustible qui est de l'hydrogène ou un mélange contenant de l'hydrogène à la conduite (20) pour le gaz naturel.

11. Procédé selon l'une quelconque des revendications 8 à 10, **caractérisé en ce que** la première zone de combustion (8) est définie par une première chambre de combustion et la deuxième zone de combustion (13) est définie par une deuxième chambre de combustion.

12. Procédé selon l'une quelconque des revendications 8 à 10, **caractérisé en ce que** la première zone de combustion (8) et la deuxième zone de combustion (13) sont toutes deux définies par une même chambre de combustion.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090277182 A